(19) Europäisches Patentamt
European Patent Office
Office européen des brevets

(11) **EP 3 300 368 A1**

(12) **EUROPEAN PATENT APPLICATION**
published in accordance with Art. 153(4) EPC

(43) Date of publication:
**28.03.2018 Bulletin 2018/13**

(51) Int Cl.:
**H04N 19/46** (2014.01)

(21) Application number: **15894593.1**

(22) Date of filing: **09.06.2015**

(86) International application number:
**PCT/CN2015/081066**

(87) International publication number:
**WO 2016/197323 (15.12.2016 Gazette 2016/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventors:
  • **CHEN, Hai
    Shenzhen
    Guangdong 518129 (CN)**

  • **LI, Meng
    Shenzhen
    Guangdong 518129 (CN)**
  • **ZHENG, Xiaozhen
    Shenzhen
    Guangdong 518129 (CN)**
  • **ZHENG, Jianhua
    Shenzhen
    Guangdong 518129 (CN)**

(74) Representative: **Epping - Hermann - Fischer
Patentanwaltsgesellschaft mbH
Schloßschmidstraße 5
80639 München (DE)**

(54) **VIDEO ENCODING AND DECODING METHOD, AND VIDEO ENCODER/DECODER**

(57) Embodiments of the present invention provide a video encoding method, a video decoding method, a video encoder, and a video decoder. The video encoding method includes: obtaining a to-be-encoded HDR image frame, where the HDR image frame includes multiple image blocks; determining, in multiple preset optical-electro transfer functions according to a statistical luminance value of each of the multiple image blocks, an optical-electro transfer function corresponding to the image block; performing optical-to-electrical conversion on the image block according to the optical-electro transfer function corresponding to the image block; and encoding the multiple image blocks on which the optical-to-electrical conversion has been performed. According to the embodiments of the present invention, one corresponding optical-electro transfer function is set for each image block, so as to improve a video encoding effect and better adapt to an existing video encoding framework.

FIG. 2

**Description**

**TECHNICAL FIELD**

Embodiments of the present invention relate to the field of video encoding and decoding, and more specifically, to a video encoding method, a video decoding method, a video encoder, and a video decoder.

**BACKGROUND**

In many fields, a dynamic range (Dynamic Range) is used to indicate a ratio of a maximum value to a minimum value of a variable. In a digital image field, a dynamic range indicates a ratio of a maximum luminance value to a minimum luminance value in a displayable range of an image. A dynamic range of luminance in nature is very large. A night scene under the stars has a luminance of approximately 0.001 cd/m$^2$. The sun has a luminance up to 1000000000 cd/m$^2$. Such a dynamic range achieves an order of magnitude of $1000000000/0.001=10^{13}$. However, in nature, the luminance of the sun and luminance of starlight cannot be obtained at the same time. Therefore, a dynamic range of luminance in nature (or in the real world) usually falls within a range of $10^{-3}$ to $10^6$.

Usually, in a digital image, R, G, and B channels each use one byte (8 bits) for storage. That is, a luminance indication range of each channel is 0 to 255. Herein, the range of 0 to 255 is a dynamic range of the digital image.

Because the dynamic range in nature is $10^{-3}$ to $10^6$, which is much larger than the dynamic range of the digital image, the dynamic range in nature may be referred to as a high dynamic range (High Dynamic Range, HDR). In contrast, a dynamic range of an ordinary digital image is a low dynamic range (Low Dynamic Range, LDR). An imaging process of a digital camera is actually mapping of the high dynamic range in nature to the low dynamic range of the digital image. This is usually a non-linear mapping process.

A high dynamic range image (HDR Image, HDRI) is an image that can indicate a change in a high dynamic range. Because the HDR image needs to indicate a range of brightness visible to the human eye, each color channel in the HDR image needs more data bits than that in a conventional image. For example, a pixel in the HDR image is usually represented by using a 16-bit (half precision) or 32-bit floating point number.

Information stored in the HDR image is usually information about light in a real environment in nature, and is in a unit of cd/m$^2$. However, maximum illuminance supported by a display device is limited, and cannot accurately reflect the light in the real environment in nature. As people need to use a display device to browse an image, the light information stored in the HDR image needs to be converted, by using an optical-electro transfer function (Optical-Electro Transfer Function, OETF), into an electrical signal that can be display on the display device. The optical-electro transfer function is initially applied to a conventional cathode ray tube (Cathode Ray Tube, CRT) display device. Light information and luminance values on the CRT display device can be well matched by using the optical-electro transfer function. The optical-electro transfer function herein may be a general term of functions for converting light information into an electrical signal of a display device. Therefore, an effect of conversion by using the optical-electro transfer function directly determines a display effect of an HDR image on a display device.

HDR video encoding is usually performed in a unit of an HDR image frame. Operations such as optical-to-electrical conversion, color space conversion, quantization, and video encoding are sequentially performed on an HDR image frame in an HDR video stream. Specifically, first, optical-to-electrical conversion is performed on an input HDR image frame. Then, RGB information of the converted HDR image frame is converted to YCbCr space. Data information of the image is quantized in the YCbCr space. Finally, video encoding is performed based on quantized data. HDR video decoding is a reverse process of the foregoing process. That is, first, a bitstream is decoded to obtain decoded data; then, the decoded data is converted into floating-point data in [0,1] by means of dequantization; next, data in YCbCr space is converted to RGB color space by means of color space conversion; and finally, RGB color information is converted into a 16-bit or 32-bit floating point number by using an electro-optical transfer function (Electro-Optical Transfer Function, EOTF), to indicate luminance information in the real world.

An ISO standard provides a specific HDR encoding scheme "ISO/IEC JTC1/SC29/WG11 MPEG2014/N15083". In the scheme, for an optical-to-electrical conversion process on an encoder side and a specific form of a used optical-electro transfer function PQ_TF, refer to the following formula (1):

$$\begin{cases} R' = PQ\_TF(max(0, min(R/10000,1))) \\ G' = PQ\_TF(max(0, min(G/10000,1))) \\ B' = PQ\_TF(max(0, min(B/10000,1))) \end{cases} \quad (1)$$

where:

$$PQ\_TF(L) = \left(\frac{c_1 + c_2 L^{m_1}}{1 + c_3 L^{m_1}}\right)^{m_2}$$

$$m_1 = \frac{2610}{4096} \times \frac{1}{4} = 0.1593017578125$$

$$m_2 = \frac{25\ 23}{4096} \times 128 = 78.84375$$

$$c_1 = c_3 - c_2 + 1 = \frac{3424}{4096} = 0.8359375$$

$$c_2 = \frac{2413}{4096} \times 32 = 18.8515625$$

$$c_3 = \frac{2392}{4096} \times 32 = 18.6875$$

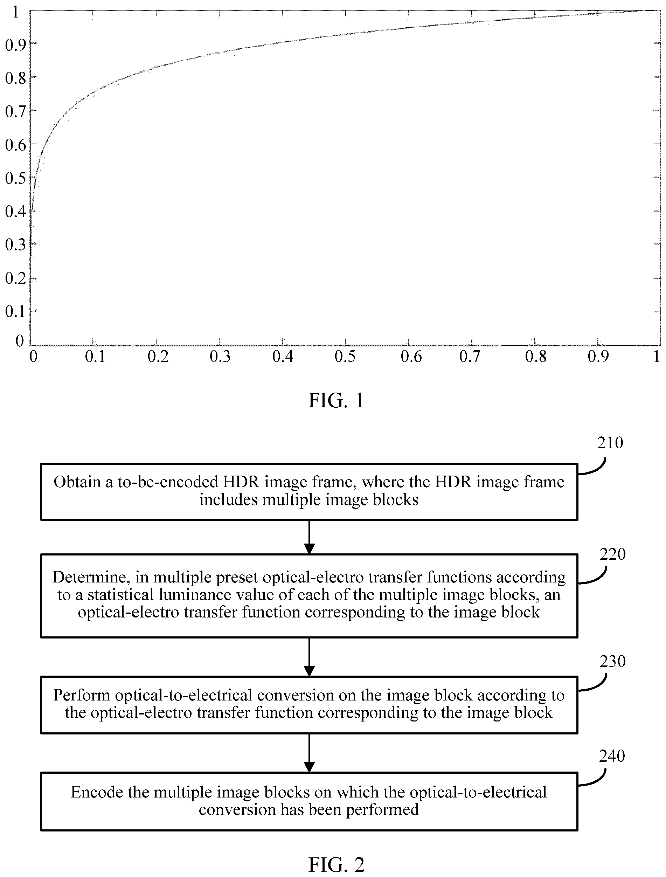

A line graph of the optical-electro transfer function PQ TF is shown in FIG. 1. Correspondingly, for an electrical-to-optical conversion process on a decoder side and a specific form of a used electro-optical transfer function, that is, inverse PQ_TF (an inverse function of PQ_TF), refer to the following formula (2):

$$\begin{cases} R = 10000 * inversePQ\_TF(R') \\ G = 10000 * inversePQ\_TF(G') \\ B = 10000 * inversePQ\_TF(B') \end{cases} \quad (2)$$

where:

$$inversePQ\_TF(N) = \left(\frac{\max\left[\left(N^{1/m_2} - c_1\right), 0\right]}{c_2 - c_3 N^{1/m_2}}\right)^{1/m_1}$$

$$m_1 = \frac{2610}{4096} \times \frac{1}{4} = 0.1593017578125$$

$$m_2 = \frac{25\ 23}{4096} \times 128 = 78.84375$$

$$c_1 = c_3 - c_2 + 1 = \frac{3424}{4096} = 0.8359375$$

$$c_2 = \frac{2413}{4096} \times 32 = 18.8515625$$

$$c_3 = \frac{2392}{4096} \times 32 = 18.6875$$

In the foregoing scheme, the optical-electro transfer function is a global optical-electro transfer function. That is, all pixels in an entire HDR image frame are converted by using the optical-electro transfer function. However, because luminance information of different image areas (for example, a foreground area and a background area) is different, using a same optical-electro transfer function for an entire frame of image does not consider spatial locality of the image, resulting in a poor HDR video encoding effect.

## SUMMARY

Embodiments of the present invention provide a video encoding method, a video decoding method, a video encoder, and a video decoder, so as to improve an HDR video encoding effect.

According to a first aspect, a video encoding method is provided, including: obtaining a to-be-encoded HDR image frame, where the HDR image frame includes multiple image blocks; determining, in multiple preset optical-electro transfer functions according to a statistical luminance value of each of the multiple image blocks, an optical-electro transfer function corresponding to the image block; performing optical-to-electrical conversion on the image block according to the optical-electro transfer function corresponding to the image block; and encoding the multiple image blocks on which the optical-to-electrical conversion has been performed.

With reference to the first aspect, in an implementation of the first aspect, the determining, in multiple preset optical-electro transfer functions according to a statistical luminance value of each of the multiple image blocks, an optical-electro transfer function corresponding to the image block includes: separately determining function values of the multiple preset optical-electro transfer functions according to the statistical luminance value of the image block; selecting, from the function values of the multiple optical-electro transfer functions, a target function value having a smallest difference from a preset value; and determining an optical-electro transfer function corresponding to the target function value as the optical-electro transfer function corresponding to the image block.

With reference to the first aspect or the foregoing implementation of the first aspect, in another implementation of the first aspect, the determining, in multiple preset optical-electro transfer functions according to a statistical luminance value of each of the multiple image blocks, an optical-electro transfer function corresponding to the image block includes: determining a first numerical interval within which the statistical luminance value of the image block falls, where the first numerical interval is one of multiple preset numerical intervals; and determining, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

With reference to any one of the first aspect or the foregoing implementations of the first aspect, in another implementation of the first aspect, the encoding the multiple image blocks on which the optical-to-electrical conversion has been performed includes: quantizing, in a unit of 8 bits, the multiple image blocks on which the optical-to-electrical conversion has been performed, to obtain quantized data of the multiple image blocks; and performing encoding according to the quantized data of the multiple image blocks.

With reference to any one of the first aspect or the foregoing implementations of the first aspect, in another implementation of the first aspect, the method further includes: writing optical-to-electrical conversion information of the image block into a bitstream, where the optical-to-electrical conversion information is used by a decoder side to determine an electro-optical transfer function for a decode block corresponding to the image block.

With reference to any one of the first aspect or the foregoing implementations of the first aspect, in another implementation of the first aspect, the optical-to-electrical conversion information includes at least one of the following information of the image block: an index of the optical-electro transfer function corresponding to the image block; the statistical luminance value of the image block; or a parameter of the optical-electro transfer function corresponding to the image block.

With reference to any one of the first aspect or the foregoing implementations of the first aspect, in another implementation of the first aspect, the statistical value is an average luminance value, a luminance variance, a maximum luminance value, a minimum luminance value, or a luminance histogram statistical value of pixels in the image block.

With reference to any one of the first aspect or the foregoing implementations of the first aspect, in another implementation of the first aspect, at least two of the multiple image blocks correspond to a same optical-electro transfer function.

With reference to any one of the first aspect or the foregoing implementations of the first aspect, in another implementation of the first aspect, the determining, in multiple preset optical-electro transfer functions according to a statistical luminance value of each of the multiple image blocks, an optical-electro transfer function corresponding to the image block includes: determining, according to a statistical luminance value of any first image block of the multiple image blocks, an optical-electro transfer function corresponding to the first image block; determining a luminance correlation between the first image block and remaining image blocks other than the first image block; determining, according to the determined luminance correlation, whether the remaining image blocks and the first image block share a same optical-electro transfer function; and determining, when it is determined that the remaining image blocks and the first image block share a same optical-electro transfer function, the optical-electro transfer function corresponding to the first image block as a global optical-electro transfer function corresponding to the HDR image frame; or determining, according to statistical luminance values of the remaining images when it is determined that an image block that cannot share a same optical-electro transfer function with the first image block exists in the remaining image blocks, respective optical-electro transfer functions corresponding to the remaining image blocks.

According to a second aspect, a video decoding method is provided, including: decoding a bitstream to reconstruct a high dynamic range HDR image frame, where the HDR image frame includes multiple image blocks; obtaining optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block; determining, in multiple preset electro-optical transfer functions according to the optical-to-electrical conversion information of the image block, the electro-optical transfer function corresponding to the image block; and performing electrical-to-optical conversion on the image block according to the electro-optical transfer function corresponding to the image block.

With reference to the second aspect, in an implementation of the second aspect, the optical-to-electrical conversion information includes index information used to indicate an index of the electro-optical transfer function for the image block; the index information is determined by the encoder side based on an index of an optical-electro transfer function corresponding to the image block; and the determining, in multiple preset electro-optical transfer functions according to the optical-to-electrical conversion information of the image block, the electro-optical transfer function corresponding to the image block includes: determining, in the multiple preset electro-optical transfer functions according to the index of the electro-optical transfer function for the image block, the electro-optical transfer function corresponding to the image block.

With reference to the second aspect or the foregoing implementation of the second aspect, in another implementation of the second aspect, the optical-to-electrical conversion information includes the statistical luminance value of the code block corresponding to the image block; and the determining, in multiple preset electro-optical transfer functions according to the optical-to-electrical conversion information of the image block, the electro-optical transfer function corresponding to the image block includes: separately determining function values of the multiple preset electro-optical transfer functions according to the statistical luminance value of the code block corresponding to the image block; selecting, from the function values of the multiple electro-optical transfer functions, a target function value having a smallest difference from a preset value; and determining an electro-optical transfer function corresponding to the target function value as the electro-optical transfer function corresponding to the image block.

With reference to the second aspect or the foregoing implementation of the second aspect, in another implementation of the second aspect, the optical-to-electrical conversion information includes the statistical luminance value of the code block corresponding to the image block; and the determining, in multiple preset electro-optical transfer functions according to the optical-to-electrical conversion information of the image block, the electro-optical transfer function corresponding to the image block includes: determining a first numerical interval within which the statistical luminance value of the code block corresponding to the image block falls, where the first numerical interval is one of multiple preset numerical intervals; and determining, according to a one-to-one correspondence between the multiple numerical intervals and the multiple electro-optical transfer functions, an electro-optical transfer function corresponding to the first numerical interval as the electro-optical transfer function corresponding to the image block.

With reference to any one of the second aspect or the foregoing implementations of the second aspect, in another implementation of the second aspect, the optical-to-electrical conversion information includes the statistical luminance value of the code block corresponding to the image block; and the determining, in multiple preset electro-optical transfer functions according to the optical-to-electrical conversion information of the image block, the electro-optical transfer function corresponding to the image block includes: determining, according to a statistical luminance value of a code block corresponding to any first image block of the multiple image blocks, an electro-optical transfer function corresponding to the first image block; determining a luminance correlation between the code block corresponding to the first image block and the code blocks corresponding to remaining image blocks other than the first image block; determining, according to the determined luminance correlation, whether the remaining image blocks and the first image block share a same electro-optical transfer function; and when it is determined that the remaining image blocks and the first image block share a same electro-optical transfer function, determining the electro-optical transfer function corresponding to the first image block as a global electro-optical transfer function corresponding to the HDR image frame; or when it is determined that an image block that cannot share a same electro-optical transfer function with the first image block exists in the remaining image blocks, determining, according to statistical luminance values of the code blocks corresponding to the remaining images, respective electro-optical transfer functions corresponding to the remaining image blocks.

With reference to any one of the second aspect or the foregoing implementations of the second aspect, in another implementation of the second aspect, the optical-to-electrical conversion information includes at least one of the following information of the image block: the index information used to indicate the index of the electro-optical transfer function corresponding to the image block; information used to indicate a parameter of the electro-optical transfer function corresponding to the image block; or the statistical luminance value of the code block corresponding to the image block.

With reference to any one of the second aspect or the foregoing implementations of the second aspect, in another implementation of the second aspect, the statistical value is an average luminance value, a luminance variance, a maximum luminance value, a minimum luminance value, or a luminance histogram statistical value of pixels in the code block corresponding to the image block.

According to a third aspect, a video encoder is provided, including: an obtaining unit, configured to obtain a to-be-encoded HDR image frame, where the HDR image frame includes multiple image blocks; a determining unit, configured to determine, in multiple preset optical-electro transfer functions according to a statistical luminance value of each of the multiple image blocks, an optical-electro transfer function corresponding to the image block; an optical-to-electrical conversion unit, configured to perform optical-to-electrical conversion on the image block according to the optical-electro transfer function corresponding to the image block; and an encoding unit, configured to encode the multiple image blocks on which the optical-to-electrical conversion has been performed.

With reference to the third aspect, in an implementation of the third aspect, the determining unit is specifically configured to: separately determine function values of the multiple preset optical-electro transfer functions according to the statistical luminance value of the image block; select, from the function values of the multiple optical-electro transfer functions, a target function value having a smallest difference from a preset value; and determine an optical-electro transfer function corresponding to the target function value as the optical-electro transfer function corresponding to the image block.

With reference to the third aspect or the foregoing implementation of the third aspect, in another implementation of the third aspect, the determining unit is specifically configured to: determine a first numerical interval within which the statistical luminance value of the image block falls, where the first numerical interval is one of multiple preset numerical intervals; and determine, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

With reference to any one of the third aspect or the foregoing implementations of the third aspect, in another implementation of the third aspect, the encoding unit is specifically configured to: quantize, in a unit of 8 bits, the multiple image blocks on which the optical-to-electrical conversion has been performed, to obtain quantized data of the multiple image blocks; and perform encoding according to the quantized data of the multiple image blocks.

With reference to any one of the third aspect or the foregoing implementations of the third aspect, in another implementation of the third aspect, the video encoder further includes a write unit, configured to write optical-to-electrical conversion information of the image block into a bitstream, where the optical-to-electrical conversion information is used by a decoder side to determine an electro-optical transfer function for a decode block corresponding to the image block.

With reference to any one of the third aspect or the foregoing implementations of the third aspect, in another implementation of the third aspect, the optical-to-electrical conversion information includes at least one of the following information of the image block: an index of the optical-electro transfer function corresponding to the image block; the statistical luminance value of the image block; or a parameter of the optical-electro transfer function corresponding to the image block.

With reference to any one of the third aspect or the foregoing implementations of the third aspect, in another implementation of the third aspect, the statistical value is an average luminance value, a luminance variance, a maximum luminance value, a minimum luminance value, or a luminance histogram statistical value of pixels in the image block.

With reference to any one of the third aspect or the foregoing implementations of the third aspect, in another implementation of the third aspect, at least two of the multiple image blocks correspond to a same optical-electro transfer function.

With reference to any one of the third aspect or the foregoing implementations of the third aspect, in another implementation of the third aspect, the determining unit is specifically configured to: determine, according to a statistical luminance value of any first image block of the multiple image blocks, an optical-electro transfer function corresponding to the first image block; determine a luminance correlation between the first image block and remaining image blocks other than the first image block; determine, according to the determined luminance correlation, whether the remaining image blocks and the first image block share a same optical-electro transfer function; and determine, when determining that the remaining image blocks and the first image block share a same optical-electro transfer function, the optical-electro transfer function corresponding to the first image block as a global optical-electro transfer function corresponding to the HDR image frame; or determine, according to statistical luminance values of the remaining images when determining that an image block that cannot share a same optical-electro transfer function with the first image block exists in the remaining image blocks, respective optical-electro transfer functions corresponding to the remaining image blocks.

According to a fourth aspect, a video decoder is provided, including: a decoding unit, configured to decode a bitstream to reconstruct a high dynamic range HDR image frame, where the HDR image frame includes multiple image blocks; an obtaining unit, configured to obtain optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block; a determining unit, configured to determine, in multiple preset electro-optical transfer functions according to the optical-to-electrical conversion information of the image block, the electro-optical transfer function corresponding to the image block; and an electrical-to-optical conversion unit, configured to perform electrical-to-optical conversion on the image block according to the electro-optical transfer function corresponding to the image block.

With reference to the fourth aspect, in an implementation of the fourth aspect, the optical-to-electrical conversion information includes index information used to indicate an index of the electro-optical transfer function for the image block; the index information is determined by the encoder side based on an index of an optical-electro transfer function corresponding to the image block; and the determining unit is specifically configured to determine, in the multiple preset electro-optical transfer functions according to the index of the electro-optical transfer function for the image block, the electro-optical transfer function corresponding to the image block.

With reference to the fourth aspect or the foregoing implementation of the fourth aspect, in another implementation of the fourth aspect, the optical-to-electrical conversion information includes the statistical luminance value of the code block corresponding to the image block; and the determining unit is specifically configured to: separately determine function values of the multiple preset electro-optical transfer functions according to the statistical luminance value of the code block corresponding to the image block; select, from the function values of the multiple electro-optical transfer functions, a target function value having a smallest difference from a preset value; and determine an electro-optical transfer function corresponding to the target function value as the electro-optical transfer function corresponding to the image block.

With reference to the fourth aspect or the foregoing implementation of the fourth aspect, in another implementation of the fourth aspect, the optical-to-electrical conversion information includes the statistical luminance value of the code block corresponding to the image block; and the determining unit is specifically configured to: determine a first numerical interval within which the statistical luminance value of the code block corresponding to the image block falls, where the first numerical interval is one of multiple preset numerical intervals; and determine, according to a one-to-one correspondence between the multiple numerical intervals and the multiple electro-optical transfer functions, an electro-optical transfer function corresponding to the first numerical interval as the electro-optical transfer function corresponding to the image block.

With reference to any one of the fourth aspect or the foregoing implementations of the fourth aspect, in another implementation of the fourth aspect, the optical-to-electrical conversion information includes the statistical luminance value of the code block corresponding to the image block; and the determining unit is specifically configured to: determine, according to a statistical luminance value of a code block corresponding to any first image block of the multiple image blocks, an electro-optical transfer function corresponding to the first image block; determine a luminance correlation between the code block corresponding to the first image block and the code blocks corresponding to remaining image blocks other than the first image block; determine, according to the determined luminance correlation, whether the remaining image blocks and the first image block share a same electro-optical transfer function; and when determining that the remaining image blocks and the first image block share a same electro-optical transfer function, determine the electro-optical transfer function corresponding to the first image block as a global electro-optical transfer function corresponding to the HDR image frame; or when determining that an image block that cannot share a same electro-optical transfer function with the first image block exists in the remaining image blocks, determine, according to statistical luminance values of the code blocks corresponding to the remaining images, respective electro-optical transfer functions corresponding to the remaining image blocks.

With reference to any one of the fourth aspect or the foregoing implementations of the fourth aspect, in another implementation of the fourth aspect, the optical-to-electrical conversion information includes at least one of the following information of the image block: the index information used to indicate the index of the electro-optical transfer function corresponding to the image block; information used to indicate a parameter of the electro-optical transfer function corresponding to the image block; or the statistical luminance value of the code block corresponding to the image block.

With reference to any one of the fourth aspect or the foregoing implementations of the fourth aspect, in another implementation of the fourth aspect, the statistical value is an average luminance value, a luminance variance, a maximum luminance value, a minimum luminance value, or a luminance histogram statistical value of pixels in the code block corresponding to the image block.

According to the embodiments of the present invention, the HDR image frame is divided into the multiple image blocks, and then the optical-electro transfer function corresponding to the image block is selected from the multiple preset optical-electro transfer functions according to the statistical luminance value of the image block. In this way, an optical-electro transfer function for an image block is determined based on local luminance of the image block. Optical-electro transfer functions for different image blocks may be the same or may be different. Compared with a manner of using a global optical-electro transfer function for an entire frame of image in the prior art, the present invention comprehensively considers spatial locality of an image, and can improve an HDR video encoding effect.

**BRIEF DESCRIPTION OF DRAWINGS**

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a line graph of an existing optical-electro transfer function;
FIG. 2 is a schematic flowchart of a video encoding method according to an embodiment of the present invention;
FIG. 3 is a line graph of multiple preset optical-electro transfer functions according to an embodiment of the present invention;
FIG. 4 is a schematic flowchart of a video decoding method according to an embodiment of the present invention;
FIG. 5 is a line graph of multiple preset electro-optical transfer functions according to an embodiment of the present invention;
FIG. 6 is a schematic block diagram of a video encoder according to an embodiment of the present invention;
FIG. 7 is a schematic block diagram of a video decoder according to an embodiment of the present invention;
FIG. 8 is a schematic block diagram of a video encoder according to an embodiment of the present invention; and
FIG. 9 is a schematic block diagram of a video decoder according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

FIG. 2 is a schematic flowchart of a video encoding method according to an embodiment of the present invention. The method in FIG. 2 may be performed by a video encoder. The method in FIG. 2 includes the following steps.

210: Obtain a to-be-encoded HDR image frame, where the HDR image frame includes multiple image blocks.
It should be understood that the HDR image frame may be any image frame obtained from an HDR video stream. Each color component (or referred to as a channel) of a pixel in the HDR image frame may be a 16-bit or 32-bit floating point number used to represent luminance information in the real world. The pixel in the HDR image frame may be represented by RGB and in a unit of cd/m$^2$.

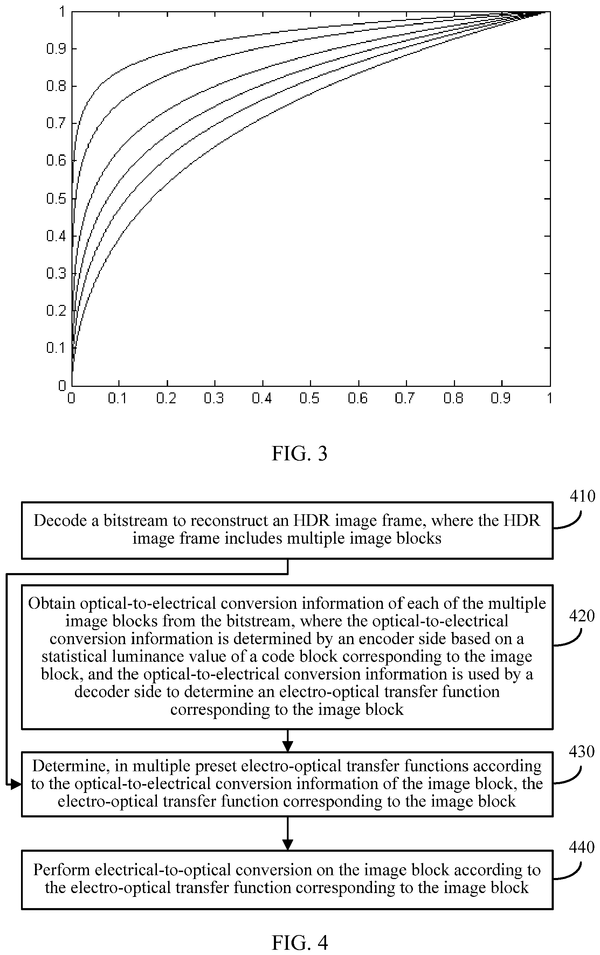

220: Determine, in multiple preset optical-electro transfer functions according to a statistical luminance value of each of the multiple image blocks, an optical-electro transfer function corresponding to the image block.
It should be understood that the foregoing statistical value may be an average luminance value of pixels in the image block, a luminance variance of pixels in the image block, a maximum luminance value of pixels in the image block, a minimum luminance value of pixels in the image block, or a luminance histogram statistical value of pixels in the image block. Specifically, a luminance component of an HDR image is more important than a chrominance component, and the luminance component can better reflect local and overall illuminance characteristics in this scenario. In this embodiment of the present invention, statistics about luminance of each image block in the HDR image frame may be first collected for analysis on an encoder side, so as to obtain the statistical luminance value of the image block.
It should be understood that there are many optical-electro transfer functions meeting characteristics of the human eye in the prior art, for example, the formula (1) described above. The multiple preset optical-electro transfer functions in this embodiment of the present invention may be selected from the optical-electro transfer functions in the prior art, or may be obtained by adjusting a value of a parameter in an optical-electro transfer function in the prior art. For example, a value of an exponent $m_2$ in the formula (1) may be adjusted, and 48.8, 78.8, 128.8, 168.8, 208.8, and 258.8 are separately assigned to $m_2$, so as to obtain six optical-electro transfer functions shown in FIG. 3. A larger value of $m_2$ indicates a flatter front part of a curve.

230: Perform optical-to-electrical conversion on the image block according to the optical-electro transfer function corresponding to the image block.
It should be noted that after the optical-electro transfer functions are selected, a specific optical-to-electrical conversion operation may be performed in a manner in the prior art. For example, optical-to-electrical conversion can be performed in a manner of creating a lookup table, by means of segmental linear fitting, or the like. Details are not described herein.

240: Encode the multiple image blocks on which the optical-to-electrical conversion has been performed.

Step 240 may include: converting the multiple image blocks on which the optical-to-electrical conversion has been performed from current color space (for example, RGB space or YUV space) to YCbCr space; quantizing data information of the multiple image blocks in a unit of 8 bits or 10 bits in the YCbCr space; and performing encoding by using quantized data.

In this embodiment of the present invention, the optical-electro transfer function corresponding to the image block is selected from the multiple preset optical-electro transfer functions according to the statistical luminance value of the image block. In this way, an optical-electro transfer function for an image block is determined based on luminance of the image block. Optical-electro transfer functions for different image blocks may be the same or may be different. Compared with a manner of using a global optical-electro transfer function for an entire frame of image in the prior art, the present invention fully considers spatial locality of an image, and can improve an HDR video encoding effect. In addition, in an existing video image encoding framework, an image is usually divided into blocks for encoding. In this embodiment of the present invention, one corresponding optical-electro transfer function is set for each image block, so as to better adapt to the existing video encoding framework.

Optionally, in an embodiment, step 220 may include: separately determining function values of the multiple preset optical-electro transfer functions according to the statistical luminance value of the image block; selecting, from the function values of the multiple optical-electro transfer functions, a target function value having a smallest difference from a preset value; and determining an optical-electro transfer function corresponding to the target function value as the optical-electro transfer function corresponding to the image block.

For example, because perception of details by the human eye is directly proportional to an average luminance value of an image, an average luminance value of each image block may be selected as the statistical luminance value. The six optical-electro transfer functions shown in FIG. 3 are used as an example. During actual computation, the average luminance values may be normalized first, and then substituted into the six optical-electro transfer functions shown in FIG. 3, to obtain six function values. The preset value may be set to 0.8. That is, an optical-electro transfer function having a function value closest to 0.8 may be considered as an optimum optical-electro transfer function. In this way, the optimum optical-electro transfer function may be selected by comparing the six function values and 0.8, as the optical-electro transfer function corresponding to the image block.

Optionally, in an embodiment, step 220 may include: determining a first numerical interval within which the statistical luminance value of the image block falls, where the first numerical interval is one of multiple preset numerical intervals; and determining, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

Referring to FIG. 1, in an HDR encoding scheme "ISO/IEC JTC1/SC29/WG11 MPEG2014/N15083" in an ISO standard, an optical-electro transfer function maps data in an interval [0,0.1] (which is equivalent to that luminance is from 0 to 1000 cd/m$^2$) into an interval of 0 to 0.7. Mapping of data in an interval (0.1,1] only to a small interval of 0.7 to 1 causes losses of a large amount of information. For example, data for which luminance ranges from 2023 cd/m2 to 2050 cd/m2 may all be mapped to 0.8, losing detailed information of an image in such a luminance range. To compensate for such losses, the HDR encoding scheme expands a quantity of quantized bits to 10 bits instead of continuing to perform quantization in a unit of 8 bits in the existing framework. This reduces data losses to some extent, but increases encoding complexity, causes a waste of resources, and is incompatible with the existing encoding framework.

Optionally, in an embodiment, step 240 may include: quantizing, in a unit of 8 bits, the multiple image blocks on which the optical-to-electrical conversion has been performed, to obtain quantized data of the multiple image blocks; and performing encoding according to the quantized data of the multiple image blocks.

It should be understood that the quantizing, in a unit of 8 bits, the multiple image blocks on which the optical-to-electrical conversion has been performed may be: quantizing each color component of each pixel in the HDR image frame as 8-bit data.

In this embodiment of the present invention, an image block instead of an entire image frame is used to perform optical-to-electrical conversion, a luminance range of the image block is less than that of the entire image frame, and in such a small luminance range, an 8-bit quantization manner can satisfy a requirement, that is, not losing a large amount of image information. Therefore, quantization can still be performed in a unit of 8 bits, so as to be better compatible with the existing encoding framework.

Optionally, in an embodiment, the method in FIG. 2 may further include: writing optical-to-electrical conversion information of the image block into a bitstream, where the optical-to-electrical conversion information is used by a decoder side to determine an electro-optical transfer function for a decode block corresponding to the image block.

Optionally, in an embodiment, the optical-to-electrical conversion information may include at least one of the following information of the image block: an index of the optical-electro transfer function corresponding to the image block; the statistical luminance value of the image block; or a parameter of the optical-electro transfer function corresponding to the image block.

For example, N optical-electro transfer functions are set on an encoder side, and N electro-optical transfer functions are set on a decoder side. The N electro-optical transfer functions are respectively inverse functions of the N optical-electro transfer functions on the encoder side. Further, the N optical-electro transfer functions on the encoder side have indexes, the N electro-optical transfer functions on the decoder side also have indexes, and the indexes of the optical-electro transfer functions and the electro-optical transfer functions that are inverse functions of each other are the same. During actual encoding, after an optical-electro transfer function corresponding to an image block is determined, an index of the optical-electro transfer function may be written into a bitstream, and the bitstream is transmitted to the decoder side. When decoding a decode block corresponding to the image block, the decoder side may find a corresponding electro-optical transfer function according to the index.

Optionally, in an embodiment, at least two of the multiple image blocks correspond to a same optical-electro transfer function.

Optionally, in an embodiment, step 220 may include: determining, according to a statistical luminance value of any first image block of the multiple image blocks, an optical-electro transfer function corresponding to the first image block; determining a luminance correlation between the first image block and remaining image blocks other than the first image block; determining, according to the determined luminance correlation, whether the remaining image blocks and the first image block share a same optical-electro transfer function; and determining, when it is determined that the remaining image blocks and the first image block share a same optical-electro transfer function, the optical-electro transfer function corresponding to the first image block as a global optical-electro transfer function corresponding to the HDR image frame; or determining, according to statistical luminance values of the remaining images when it is determined that an image block that cannot share a same optical-electro transfer function with the first image block exists in the remaining image blocks, respective optical-electro transfer functions corresponding to the remaining image blocks.

It should be understood that the luminance correlation between the first image block and the remaining image blocks other than the first image block may be determined in multiple manners. For example, a difference between a statistical luminance value of the first image block and statistical luminance values of the remaining image blocks is determined. When the difference is less than a preset threshold, it is determined that they have a strong correlation; otherwise, it is determined that they have a weak correlation. The determining, when it is determined that the remaining image blocks and the first image block share a same optical-electro transfer function, the optical-electro transfer function corresponding to the first image block as a global optical-electro transfer function corresponding to the HDR image frame means: when all of the remaining image blocks have a relatively strong correlation with the first image block, there is no need to specify one optical-electro transfer function for each image block, and only a global optical-electro transfer function needs to be specified for the entire HDR image frame like in the prior art. This can reduce a computation amount on the encoder side and reduce an amount of data in the bitstream. The determining, according to statistical luminance values of the remaining images when it is determined that an image block that cannot share a same optical-electro transfer function with the first image block exists in the remaining image blocks, respective optical-electro transfer functions corresponding to the remaining image blocks means: when an image block that has a relatively weak correlation with the first image block exists in the remaining image blocks, determining, in a manner the same as that of the first image block, a respective optical-electro transfer function corresponding to each of the remaining image blocks.

It should be understood that there may be a relatively high possibility that optical-electro transfer functions corresponding to image blocks having a strong correlation are the same, and there may be a relatively low possibility that optical-electro transfer functions corresponding to image blocks having a weak correlation are the same. Exactly based on this, in this embodiment of the present invention, whether to use a global optical-electro transfer function or allocate a respective optical-electro transfer function to each image block is selected by determining a correlation between the image blocks, making an encoding scheme on the encoder side more flexible.

Optionally, in an embodiment, step 220 may include: determining, according to a statistical luminance value of any first image block of the multiple image blocks, an optical-electro transfer function corresponding to the first image block; determining a luminance correlation between the first image block and remaining image blocks other than the first image block; and determining, according to the determined luminance correlation, an optical-electro transfer function for a target image block of the remaining image blocks as the optical-electro transfer function corresponding to the first image block, where a correlation between the target image block and the first image block is greater than a preset threshold.

In this embodiment of the present invention, an optical-electro transfer function for an image block having a strong correlation with the first image block is conveniently obtained, thereby reducing computational complexity on the encoder side.

The video encoding method according to this embodiment of the present invention is described in detail in the foregoing from the perspective of the encoder side with reference to FIG. 2. A video decoding method according to an embodiment of the present invention is described in the following from the perspective of the decoder side with reference to FIG. 3.

It should be understood that functions, operations, and characteristics of the encoder side correspond to those of the decoder side. For brevity, descriptions are omitted to some extent.

FIG. 4 is a schematic flowchart of a video decoding method according to an embodiment of the present invention. The method in FIG. 4 may be performed by a decoder. The method in FIG. 4 includes the following steps.

410: Decode a bitstream to reconstruct an HDR image frame, where the HDR image frame includes multiple image blocks.

420: Obtain optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block.

It should be understood that on the decoder side, the electro-optical transfer function corresponding to the image block needs to be determined by using the optical-to-electrical conversion information transmitted by the encoder side. The optical-to-electrical conversion information may be a part or all of statistical luminance information obtained on the encoder side, or may be an index of the electro-optical transfer function corresponding to the image block, or may be a parameter of the electro-optical transfer function corresponding to the image block (the parameter of the electro-optical transfer function needs to be reversely solved on the encoder side based on an optical-electro transfer function), or may be a parameter of an optical-electro transfer function for a code block corresponding to the image block (in this case, a parameter of an inverse function of the optical-electro transfer function needs to be determined by the decoder side based on the parameter of the optical-electro transfer function). Certainly, alternatively, the statistical information may be a combination of the foregoing information. For example, optical-to-electrical conversion information of some image blocks is statistical information obtained on the encoder side, and optical-to-electrical conversion information of other image blocks is indexes of electro-optical transfer functions corresponding to the image blocks.

430: Determine, in multiple preset electro-optical transfer functions according to the optical-to-electrical conversion information of the image block, the electro-optical transfer function corresponding to the image block.

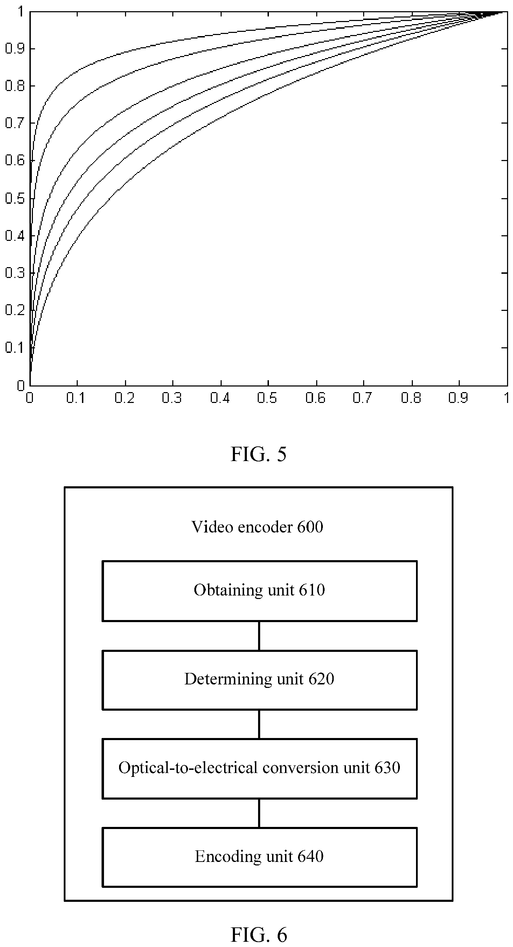

It should be understood that the multiple electro-optical transfer functions on the decoder side may be inverse functions of multiple optical-electro transfer functions on the encoder side. In an example, the optical-electro transfer functions on the encoder side are the six functions shown in FIG. 3. The electro-optical transfer functions on the decoder side may be six functions shown in FIG. 5.

440: Perform electrical-to-optical conversion on the image block according to the electro-optical transfer function corresponding to the image block.

By means of determining the electro-optical transfer function corresponding to the image block, this embodiment of the present invention fully considers spatial locality of an image, and can improve an HDR video encoding effect.

Optionally, in an embodiment, the optical-to-electrical conversion information includes index information used to indicate an index of the electro-optical transfer function for the image block. The index information is determined by the encoder side based on an index of an optical-electro transfer function corresponding to the image block. The determining, in multiple preset electro-optical transfer functions according to the optical-to-electrical conversion information of the image block, the electro-optical transfer function corresponding to the image block includes: determining, in the multiple preset electro-optical transfer functions according to the index of the electro-optical transfer function for the image block, the electro-optical transfer function corresponding to the image block.

Optionally, in an embodiment, the optical-to-electrical conversion information may include the statistical luminance value of the code block corresponding to the image block. Step 430 may include: separately determining function values of the multiple preset electro-optical transfer functions according to the statistical luminance value of the code block corresponding to the image block; selecting, from the function values of the multiple electro-optical transfer functions, a target function value having a smallest difference from a preset value; and determining an electro-optical transfer function corresponding to the target function value as the electro-optical transfer function corresponding to the image block.

Optionally, in an embodiment, the optical-to-electrical conversion information includes the statistical luminance value of the code block corresponding to the image block. Step 430 may include: determining a first numerical interval within which the statistical luminance value of the code block corresponding to the image block falls, where the first numerical interval is one of multiple preset numerical intervals; and determining, according to a one-to-one correspondence between the multiple numerical intervals and the multiple electro-optical transfer functions, an electro-optical transfer function corresponding to the first numerical interval as the electro-optical transfer function corresponding to the image block.

Optionally, in an embodiment, after step 410, the method may further include: dequantizing decoded data in a unit of 8 bits.

Optionally, in an embodiment, the decoding information includes at least one of the following information of the image block: the index information used to indicate the index of the electro-optical transfer function corresponding to the image block; information used to indicate a parameter of the electro-optical transfer function corresponding to the image block; or the statistical luminance value of the code block corresponding to the image block.

Optionally, in an embodiment, the statistical value is an average luminance value of pixels in the image block, a luminance variance of pixels in the image block, a maximum luminance value of pixels in the image block, a minimum luminance value of pixels in the image block, or a luminance histogram statistical value of pixels in the image block.

Optionally, in an embodiment, the optical-to-electrical conversion information includes the statistical luminance value of the code block corresponding to the image block. Step 430 may include: determining, according to a statistical luminance value of a code block corresponding to any first image block of the multiple image blocks, an electro-optical transfer function corresponding to the first image block; determining a luminance correlation between the code block corresponding to the first image block and the code blocks corresponding to remaining image blocks other than the first image block; determining, according to the determined luminance correlation, whether the remaining image blocks and the first image block share a same electro-optical transfer function; and when it is determined that the remaining image blocks and the first image block share a same electro-optical transfer function, determining the electro-optical transfer function corresponding to the first image block as a global electro-optical transfer function corresponding to the HDR image frame; or when it is determined that an image block that cannot share a same electro-optical transfer function with the first image block exists in the remaining image blocks, determining, according to statistical luminance values of the code blocks corresponding to the remaining images, respective electro-optical transfer functions corresponding to the remaining image blocks.

Optionally, in an embodiment, the optical-to-electrical conversion information includes the statistical luminance value of the code block corresponding to the image block. Step 430 may include: determining, according to a statistical luminance value of a code block corresponding to any first image block of the multiple image blocks, an electro-optical transfer function corresponding to the first image block; determining a luminance correlation between the code block corresponding to the first image block and the code blocks corresponding to remaining image blocks other than the first image block; and determining, according to the determined luminance correlation, an optical-electro transfer function for a target image block of the remaining image blocks as the electro-optical transfer function corresponding to the first image block, where a correlation between luminance of the code block corresponding to the target image block and luminance of the code block corresponding to the first image block is greater than a preset threshold.

For most scenarios, direct optical-to-electrical conversion and electrical-to-optical conversion can well restore an HDR image. However, for some extreme HDR scenarios such as a scenario of an extremely large dynamic range or a special test scenario, there may be a blocking artifact when different transfer functions are used for adjacent image blocks. For this type of problem, an effective solution is to perform mixed processing for a pixel (assumed to be 4) at a block boundary: First, conversion values O1 and O2 of a boundary pixel are respectively obtained, by using a transfer function for an image block and a transfer function for an adjacent block, by means of computation or by using a lookup table. Then, to prevent a local method from generating a blocking artifact for a block boundary pixel, simple linear interpolation may be performed on 01 and 02 by using a distance between coordinates of the boundary pixel and a boundary as a weight to obtain a final conversion value. Similarly, bilinear interpolation may be used for boundary pixels of four corners. There are many manners of resolving a blocking artifact problem of an image block. For details, refer to the prior art. Details are not described herein.

The video encoding method according to the embodiments of the present invention is described in the foregoing with reference to FIG. 1 to FIG. 5. A video encoder and a video decoder according to the embodiments of the present invention are described in the following with reference to FIG. 6 to FIG. 9.

FIG. 6 is a schematic block diagram of a video encoder according to an embodiment of the present invention. It should be understood that the video encoder 600 in FIG. 6 can perform the steps performed by the video encoder in FIG. 2. To avoid repetition, details are not described herein again. The video encoder 600 includes:

an obtaining unit 610, configured to obtain a to-be-encoded HDR image frame, where the HDR image frame includes multiple image blocks;
a determining unit 620, configured to determine, in multiple preset optical-electro transfer functions according to a statistical luminance value of each of the multiple image blocks, an optical-electro transfer function corresponding to the image block;
an optical-to-electrical conversion unit 630, configured to perform optical-to-electrical conversion on the image block according to the optical-electro transfer function corresponding to the image block; and
an encoding unit 640, configured to encode the multiple image blocks on which the optical-to-electrical conversion has been performed.

According to this embodiment of the present invention, the HDR image frame is divided into the multiple image blocks, and then the optical-electro transfer function corresponding to the image block is selected from the multiple preset optical-electro transfer functions according to the statistical luminance value of the image block. In this way, an optical-electro transfer function for an image block is determined based on luminance of the image block. Optical-electro transfer functions for different image blocks may be the same or may be different. Compared with a manner of using a global optical-electro transfer function for an entire frame of image in the prior art, the present invention fully considers spatial locality of an image, and can improve an HDR video encoding effect.

Optionally, in an embodiment, the determining unit 620 may be specifically configured to: separately determine function values of the multiple preset optical-electro transfer functions according to the statistical luminance value of the image block; select, from the function values of the multiple optical-electro transfer functions, a target function value having a smallest difference from a preset value; and determine an optical-electro transfer function corresponding to the target function value as the optical-electro transfer function corresponding to the image block.

Optionally, in an embodiment, the determining unit 620 may be specifically configured to: determine a first numerical interval within which the statistical luminance value of the image block falls, where the first numerical interval is one of multiple preset numerical intervals; and determine, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

Optionally, in an embodiment, the encoding unit 640 may be specifically configured to: quantize, in a unit of 8 bits, the multiple image blocks on which the optical-to-electrical conversion has been performed, to obtain quantized data of the multiple image blocks; and perform encoding according to the quantized data of the multiple image blocks.

Optionally, in an embodiment, the video encoder 600 may further include: a write unit, configured to write optical-to-electrical conversion information of the image block into a bitstream, where the optical-to-electrical conversion information is used by a decoder side to determine an electro-optical transfer function for a decode block corresponding to the image block.

Optionally, in an embodiment, the optical-to-electrical conversion information includes at least one of the following information of the image block: an index of the optical-electro transfer function corresponding to the image block; the statistical luminance value of the image block; or a parameter of the optical-electro transfer function corresponding to the image block.

Optionally, in an embodiment, the statistical value is an average luminance value, a luminance variance, a maximum luminance value, a minimum luminance value, or a luminance histogram statistical value of pixels in the image block.

Optionally, in an embodiment, at least two of the multiple image blocks correspond to a same optical-electro transfer function.

Optionally, in an embodiment, the determining unit 620 is specifically configured to: determine, according to a statistical luminance value of any first image block of the multiple image blocks, an optical-electro transfer function corresponding to the first image block; determine a luminance correlation between the first image block and remaining image blocks other than the first image block; determine, according to the determined luminance correlation, whether the remaining image blocks and the first image block share a same optical-electro transfer function; and determine, when determining that the remaining image blocks and the first image block share a same optical-electro transfer function, the optical-electro transfer function corresponding to the first image block as a global optical-electro transfer function corresponding to the HDR image frame; or determine, according to statistical luminance values of the remaining images when determining that an image block that cannot share a same optical-electro transfer function with the first image block exists in the remaining image blocks, respective optical-electro transfer functions corresponding to the remaining image blocks.

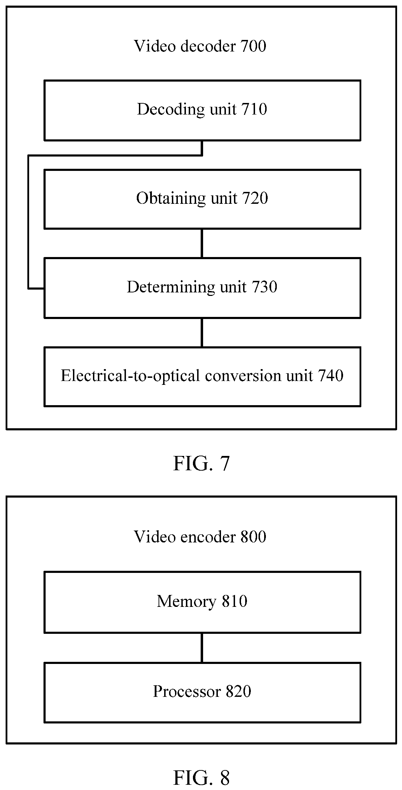

FIG. 7 is a schematic block diagram of a video decoder according to an embodiment of the present invention. It should be understood that the video decoder 700 in FIG. 7 can perform the steps performed by the video decoder in FIG. 4. To avoid repetition, details are not described herein again. The video decoder 700 includes:

a decoding unit 710, configured to decode a bitstream to reconstruct an HDR image frame, where the HDR image frame includes multiple image blocks;

an obtaining unit 720, configured to obtain optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block;

a determining unit 730, configured to determine, in multiple preset electro-optical transfer functions according to the optical-to-electrical conversion information of the image block, the electro-optical transfer function corresponding to the image block; and

an electrical-to-optical conversion unit 740, configured to perform electrical-to-optical conversion on the image block according to the electro-optical transfer function corresponding to the image block.

By means of determining the electro-optical transfer function corresponding to the image block, this embodiment of the present invention fully considers spatial locality of an image, and can improve an HDR video encoding effect.

Optionally, in an embodiment, the optical-to-electrical conversion information includes index information used to indicate an index of the electro-optical transfer function for the image block. The index information is determined by the encoder side based on an index of an optical-electro transfer function corresponding to the image block. The determining unit 730 may be specifically configured to determine, in the multiple preset electro-optical transfer functions according to the index of the electro-optical transfer function for the image block, the electro-optical transfer function corresponding to the image block.

Optionally, in an embodiment, the optical-to-electrical conversion information includes the statistical luminance value of the code block corresponding to the image block. The determining unit 730 may be specifically configured to: separately determine function values of the multiple preset electro-optical transfer functions according to the statistical luminance value of the code block corresponding to the image block; select, from the function values of the multiple electro-optical transfer functions, a target function value having a smallest difference from a preset value; and determine an electro-optical transfer function corresponding to the target function value as the electro-optical transfer function corresponding to the image block.

Optionally, in an embodiment, the optical-to-electrical conversion information includes the statistical luminance value of the code block corresponding to the image block. The determining unit 730 may be specifically configured to: determine a first numerical interval within which the statistical luminance value of the code block corresponding to the image block falls, where the first numerical interval is one of multiple preset numerical intervals; and determine, according to a one-to-one correspondence between the multiple numerical intervals and the multiple electro-optical transfer functions, an electro-optical transfer function corresponding to the first numerical interval as the electro-optical transfer function corresponding to the image block.

Optionally, in an embodiment, the video decoder 700 may further include a dequantization unit, configured to dequantize decoded data in a unit of 8 bits.

Optionally, in an embodiment, the optical-to-electrical conversion information includes the statistical luminance value of the code block corresponding to the image block. The determining unit is specifically configured to: determine, according to a statistical luminance value of a code block corresponding to any first image block of the multiple image blocks, an electro-optical transfer function corresponding to the first image block; determine a luminance correlation between the code block corresponding to the first image block and the code blocks corresponding to remaining image blocks other than the first image block; determine, according to the determined luminance correlation, whether the remaining image blocks and the first image block share a same electro-optical transfer function; and when determining that the remaining image blocks and the first image block share a same electro-optical transfer function, determine the electro-optical transfer function corresponding to the first image block as a global electro-optical transfer function corresponding to the HDR image frame; or when determining that an image block that cannot share a same electro-optical transfer function with the first image block exists in the remaining image blocks, determine, according to statistical luminance values of the code blocks corresponding to the remaining images, respective electro-optical transfer functions corresponding to the remaining image blocks.

Optionally, in an embodiment, the optical-to-electrical conversion information includes at least one of the following information of the image block: the index information used to indicate the index of the electro-optical transfer function corresponding to the image block; information used to indicate a parameter of the electro-optical transfer function corresponding to the image block; or the statistical luminance value of the code block corresponding to the image block.

Optionally, in an embodiment, the statistical value is an average luminance value, a luminance variance, a maximum luminance value, a minimum luminance value, or a luminance histogram statistical value of pixels in the code block corresponding to the image block.

FIG. 8 is a schematic block diagram of a video encoder according to an embodiment of the present invention. It should be understood that the video encoder 800 in FIG. 8 can perform the steps performed by the video encoder in FIG. 2. To avoid repetition, details are not described herein again. The video encoder 800 includes:

a memory 810, configured to store a program; and

a processor 820, configured to execute the program, where when the program is executed, the processor 820 is specifically configured to: obtain a to-be-encoded HDR image frame, where the HDR image frame includes multiple image blocks; determine, in multiple preset optical-electro transfer functions according to a statistical luminance value of each of the multiple image blocks, an optical-electro transfer function corresponding to the image block; perform optical-to-electrical conversion on the image block according to the optical-electro transfer function corresponding to the image block; and encode the multiple image blocks on which the optical-to-electrical conversion has been performed.

According to this embodiment of the present invention, the HDR image frame is divided into the multiple image blocks, and then the optical-electro transfer function corresponding to the image block is selected from the multiple preset optical-electro transfer functions according to the statistical luminance value of the image block. In this way, an optical-electro transfer function for an image block is determined based on luminance of the image block. Optical-electro transfer functions for different image blocks may be the same or may be different. Compared with a manner of using a global optical-electro transfer function for an entire frame of image in the prior art, the present invention fully considers spatial locality of an image, and can improve an HDR video encoding effect.

Optionally, in an embodiment, the processor 820 may be specifically configured to: separately determine function values of the multiple preset optical-electro transfer functions according to the statistical luminance value of the image block; select, from the function values of the multiple optical-electro transfer functions, a target function value having a smallest difference from a preset value; and determine an optical-electro transfer function corresponding to the target function value as the optical-electro transfer function corresponding to the image block.

Optionally, in an embodiment, the processor 820 may be specifically configured to: determine a first numerical interval within which the statistical luminance value of the image block falls, where the first numerical interval is one of multiple preset numerical intervals; and determine, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

Optionally, in an embodiment, the processor 820 may be specifically configured to: quantize, in a unit of 8 bits, the multiple image blocks on which the optical-to-electrical conversion has been performed, to obtain quantized data of the multiple image blocks; and perform encoding according to the quantized data of the multiple image blocks.

Optionally, in an embodiment, the processor 820 is further configured to: write optical-to-electrical conversion information of the image block into a bitstream, where the optical-to-electrical conversion information is used by a decoder side to determine an electro-optical transfer function for a decode block corresponding to the image block.

Optionally, in an embodiment, the optical-to-electrical conversion information includes at least one of the following information of the image block: an index of the optical-electro transfer function corresponding to the image block; the statistical luminance value of the image block; or a parameter of the optical-electro transfer function corresponding to the image block.

Optionally, in an embodiment, the statistical value is an average luminance value, a luminance variance, a maximum luminance value, a minimum luminance value, or a luminance histogram statistical value of pixels in the image block.

Optionally, in an embodiment, at least two of the multiple image blocks correspond to a same optical-electro transfer function.

Optionally, in an embodiment, the processor 820 is specifically configured to: determine, according to a statistical luminance value of any first image block of the multiple image blocks, an optical-electro transfer function corresponding to the first image block; determine a luminance correlation between the first image block and remaining image blocks other than the first image block; determine, according to the determined luminance correlation, whether the remaining image blocks and the first image block share a same optical-electro transfer function; and determine, when determining that the remaining image blocks and the first image block share a same optical-electro transfer function, the optical-electro transfer function corresponding to the first image block as a global optical-electro transfer function corresponding to the HDR image frame; or determine, according to statistical luminance values of the remaining images when determining that an image block that cannot share a same optical-electro transfer function with the first image block exists in the remaining image blocks, respective optical-electro transfer functions corresponding to the remaining image blocks.

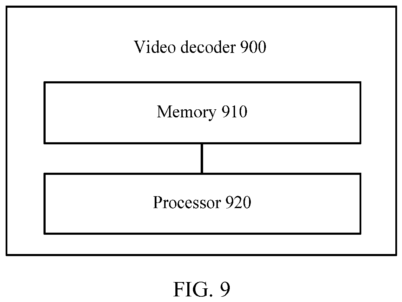

FIG. 9 is a schematic block diagram of a video decoder according to an embodiment of the present invention. It should be understood that the video decoder 900 in FIG. 9 can perform the steps performed by the video decoder in FIG. 4. To avoid repetition, details are not described herein again. The video decoder 900 includes:

a memory 910, configured to store a program; and
a processor 920, configured to execute the program, where when the program is executed, the processor 920 is specifically configured to: decode a bitstream to reconstruct a high dynamic range HDR image frame, where the HDR image frame includes multiple image blocks; obtain optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block; determine, in multiple preset electro-optical transfer functions according to the optical-to-electrical conversion information of the image block, the electro-optical transfer function corresponding to the image block; and perform electrical-to-optical conversion on the image block according to the electro-optical transfer function corresponding to the image block.

By means of determining the electro-optical transfer function corresponding to the image block, this embodiment of the present invention fully considers spatial locality of an image, and can improve an HDR video encoding effect.

Optionally, in an embodiment, the optical-to-electrical conversion information includes index information used to indicate an index of the electro-optical transfer function for the image block. The index information is determined by the encoder side based on an index of an optical-electro transfer function corresponding to the image block. The processor 920 may be specifically configured to determine, in the multiple preset electro-optical transfer functions according to the index of the electro-optical transfer function for the image block, the electro-optical transfer function corresponding to the image block.

Optionally, in an embodiment, the optical-to-electrical conversion information includes the statistical luminance value of the code block corresponding to the image block. The processor 920 may be specifically configured to: separately determine function values of the multiple electro-optical transfer functions according to the statistical luminance value of the code block corresponding to the image block; select, from the function values of the multiple electro-optical transfer functions, a target function value having a smallest difference from a preset value; and determine an electro-optical transfer function corresponding to the target function value as the electro-optical transfer function corresponding to the image block.

Optionally, in an embodiment, the optical-to-electrical conversion information includes the statistical luminance value of the code block corresponding to the image block. The processor 920 may be specifically configured to: determine a first numerical interval within which the statistical luminance value of the code block corresponding to the image block falls, where the first numerical interval is one of multiple preset numerical intervals; and determine, according to a one-to-one correspondence between the multiple numerical intervals and the multiple electro-optical transfer functions, an electro-optical transfer function corresponding to the first numerical interval as the electro-optical transfer function corresponding to the image block.

Optionally, in an embodiment, the processor 920 may be specifically configured to: dequantize data in the bitstream in a unit of 8 bits, to obtain dequantized data of the HDR image frame; and determine the HDR image frame according to the dequantized data.

Optionally, in an embodiment, the optical-to-electrical conversion information includes the statistical luminance value of the code block corresponding to the image block. The processor 920 is specifically configured to: determine, according to a statistical luminance value of a code block corresponding to any first image block of the multiple image blocks, an electro-optical transfer function corresponding to the first image block; determine a luminance correlation between the code block corresponding to the first image block and the code blocks corresponding to remaining image blocks other than the first image block; determine, according to the determined luminance correlation, whether the remaining image blocks and the first image block share a same electro-optical transfer function; and when determining that the remaining image blocks and the first image block share a same electro-optical transfer function, determine the electro-optical transfer function corresponding to the first image block as a global electro-optical transfer function corresponding to the HDR image frame; or when determining that an image block that cannot share a same electro-optical transfer function with the first image block exists in the remaining image blocks, determine, according to statistical luminance values of the code blocks corresponding to the remaining images, respective electro-optical transfer functions corresponding to the remaining image blocks.

Optionally, in an embodiment, the optical-to-electrical conversion information includes at least one of the following information of the image block: the index information used to indicate the index of the electro-optical transfer function corresponding to the image block; information used to indicate a parameter of the electro-optical transfer function corresponding to the image block; or the statistical luminance value of the code block corresponding to the image block.

Optionally, in an embodiment, the statistical value is an average luminance value, a luminance variance, a maximum luminance value, a minimum luminance value, or a luminance histogram statistical value of pixels in the code block corresponding to the image block.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A video encoding method, comprising:

   obtaining a to-be-encoded high dynamic range HDR image frame, wherein the HDR image frame comprises multiple image blocks;
   determining, in multiple preset optical-electro transfer functions according to a statistical luminance value of each of the multiple image blocks, an optical-electro transfer function corresponding to the image block;
   performing optical-to-electrical conversion on the image block according to the optical-electro transfer function corresponding to the image block; and
   encoding the multiple image blocks on which the optical-to-electrical conversion has been performed.

2. The method according to claim 1, wherein the determining, in multiple preset optical-electro transfer functions according to a statistical luminance value of each of the multiple image blocks, an optical-electro transfer function corresponding to the image block comprises:

   separately determining function values of the multiple preset optical-electro transfer functions according to the statistical luminance value of the image block;
   selecting, from the function values of the multiple optical-electro transfer functions, a target function value having a smallest difference from a preset value; and
   determining an optical-electro transfer function corresponding to the target function value as the optical-electro transfer function corresponding to the image block.

3. The method according to claim 1, wherein the determining, in multiple preset optical-electro transfer functions according to a statistical luminance value of each of the multiple image blocks, an optical-electro transfer function corresponding to the image block comprises:

determining a first numerical interval within which the statistical luminance value of the image block falls, wherein the first numerical interval is one of multiple preset numerical intervals; and

determining, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

4. The method according to any one of claims 1 to 3, wherein the encoding the multiple image blocks on which the optical-to-electrical conversion has been performed comprises:

quantizing, in a unit of 8 bits, the multiple image blocks on which the optical-to-electrical conversion has been performed, to obtain quantized data of the multiple image blocks; and

performing encoding according to the quantized data of the multiple image blocks.

5. The method according to any one of claims 1 to 4, wherein the method further comprises:

writing optical-to-electrical conversion information of the image block into a bitstream, wherein the optical-to-electrical conversion information is used by a decoder side to determine an electro-optical transfer function for a decode block corresponding to the image block.

6. The method according to claim 5, wherein the optical-to-electrical conversion information comprises at least one of the following information of the image block:

an index of the optical-electro transfer function corresponding to the image block;

the statistical luminance value of the image block; or

a parameter of the optical-electro transfer function corresponding to the image block.

7. The method according to any one of claims 1 to 6, wherein the statistical value is an average luminance value, a luminance variance, a maximum luminance value, a minimum luminance value, or a luminance histogram statistical value of pixels in the image block.

8. The method according to any one of claims 1 to 7, wherein at least two of the multiple image blocks correspond to a same optical-electro transfer function.

9. The method according to any one of claims 1 to 8, wherein the determining, in multiple preset optical-electro transfer functions according to a statistical luminance value of each of the multiple image blocks, an optical-electro transfer function corresponding to the image block comprises:

determining, according to a statistical luminance value of any first image block of the multiple image blocks, an optical-electro transfer function corresponding to the first image block;

determining a luminance correlation between the first image block and remaining image blocks other than the first image block;

determining, according to the determined luminance correlation, whether the remaining image blocks and the first image block share a same optical-electro transfer function; and

determining, when it is determined that the remaining image blocks and the first image block share a same optical-electro transfer function, the optical-electro transfer function corresponding to the first image block as a global optical-electro transfer function corresponding to the HDR image frame; or

determining, according to statistical luminance values of the remaining images when it is determined that an image block that cannot share a same optical-electro transfer function with the first image block exists in the remaining image blocks, respective optical-electro transfer functions corresponding to the remaining image blocks.

10. A video decoding method, comprising:

decoding a bitstream to reconstruct a high dynamic range HDR image frame, wherein the HDR image frame comprises multiple image blocks;

obtaining optical-to-electrical conversion information of each of the multiple image blocks from the bitstream, wherein the optical-to-electrical conversion information is used by a decoder side to determine an electro-optical transfer function corresponding to the image block;

determining, in multiple preset electro-optical transfer functions according to the optical-to-electrical conversion information of the image block, the electro-optical transfer function corresponding to the image block; and

performing electrical-to-optical conversion on the image block according to the electro-optical transfer function corresponding to the image block.

11. The method according to claim 10, wherein the optical-to-electrical conversion information comprises index information used to indicate an index of the electro-optical transfer function for the image block; and

the determining, in multiple preset electro-optical transfer functions according to the optical-to-electrical conversion information of the image block, the electro-optical transfer function corresponding to the image block comprises:

determining, in the multiple preset electro-optical transfer functions according to the index of the electro-optical transfer function for the image block, the electro-optical transfer function corresponding to the image block.

12. The method according to claim 10, wherein the optical-to-electrical conversion information comprises a statistical luminance value of a code block corresponding to the image block; and

the determining, in multiple preset electro-optical transfer functions according to the optical-to-electrical conversion information of the image block, the electro-optical transfer function corresponding to the image block comprises:

separately determining function values of the multiple preset electro-optical transfer functions according to the statistical luminance value of the code block corresponding to the image block;

selecting, from the function values of the multiple electro-optical transfer functions, a target function value having a smallest difference from a preset value; and

determining an electro-optical transfer function corresponding to the target function value as the electro-optical transfer function corresponding to the image block.

13. The method according to claim 10, wherein the optical-to-electrical conversion information comprises a statistical luminance value of a code block corresponding to the image block; and

the determining, in multiple preset electro-optical transfer functions according to the optical-to-electrical conversion information of the image block, the electro-optical transfer function corresponding to the image block comprises:

determining a first numerical interval within which the statistical luminance value of the code block corresponding to the image block falls, wherein the first numerical interval is one of multiple preset numerical intervals; and

determining, according to a one-to-one correspondence between the multiple numerical intervals and the multiple electro-optical transfer functions, an electro-optical transfer function corresponding to the first numerical interval as the electro-optical transfer function corresponding to the image block.

14. The method according to any one of claims 10 to 13, wherein the optical-to-electrical conversion information comprises the statistical luminance value of the code block corresponding to the image block; and

the determining, in multiple preset electro-optical transfer functions according to the optical-to-electrical conversion information of the image block, the electro-optical transfer function corresponding to the image block comprises:

determining, according to a statistical luminance value of a code block corresponding to any first image block of the multiple image blocks, an electro-optical transfer function corresponding to the first image block;

determining a luminance correlation between the code block corresponding to the first image block and the code blocks corresponding to remaining image blocks other than the first image block;

determining, according to the determined luminance correlation, whether the remaining image blocks and the first image block share a same electro-optical transfer function; and

when it is determined that the remaining image blocks and the first image block share a same electro-optical transfer function, determining the electro-optical transfer function corresponding to the first image block as a global electro-optical transfer function corresponding to the HDR image frame; or

when it is determined that an image block that cannot share a same electro-optical transfer function with the first image block exists in the remaining image blocks, determining, according to statistical luminance values of the code blocks corresponding to the remaining images, respective electro-optical transfer functions corresponding to the remaining image blocks.

15. The method according to any one of claims 10 to 14, wherein the optical-to-electrical conversion information comprises at least one of the following information of the image block:

the index information used to indicate the index of the electro-optical transfer function corresponding to the image block;

information used to indicate a parameter of the electro-optical transfer function corresponding to the image block; or

the statistical luminance value of the code block corresponding to the image block.

16. The method according to any one of claims 10 to 15, wherein the statistical value is an average luminance value, a luminance variance, a maximum luminance value, a minimum luminance value, or a luminance histogram statistical value of pixels in the code block corresponding to the image block.

17. A video encoder, comprising:

an obtaining unit, configured to obtain a to-be-encoded high dynamic range HDR image frame, wherein the HDR image frame comprises multiple image blocks;

a determining unit, configured to determine, in multiple preset optical-electro transfer functions according to a statistical luminance value of each of the multiple image blocks, an optical-electro transfer function corresponding to the image block;

an optical-to-electrical conversion unit, configured to perform optical-to-electrical conversion on the image block according to the optical-electro transfer function corresponding to the image block; and

an encoding unit, configured to encode the multiple image blocks on which the optical-to-electrical conversion has been performed.

18. The video encoder according to claim 17, wherein the determining unit is specifically configured to: separately determine function values of the multiple preset optical-electro transfer functions according to the statistical luminance value of the image block; select, from the function values of the multiple optical-electro transfer functions, a target function value having a smallest difference from a preset value; and determine an optical-electro transfer function corresponding to the target function value as the optical-electro transfer function corresponding to the image block.

19. The video encoder according to claim 17, wherein the determining unit is specifically configured to: determine a first numerical interval within which the statistical luminance value of the image block falls, wherein the first numerical interval is one of multiple preset numerical intervals; and determine, according to a one-to-one correspondence between the multiple numerical intervals and the multiple optical-electro transfer functions, an optical-electro transfer function corresponding to the first numerical interval as the optical-electro transfer function corresponding to the image block whose statistical luminance value falls within the first numerical interval.

20. The video encoder according to any one of claims 17 to 19, wherein the encoding unit is specifically configured to: quantize, in a unit of 8 bits, the multiple image blocks on which the optical-to-electrical conversion has been performed, to obtain quantized data of the multiple image blocks; and perform encoding according to the quantized data of the multiple image blocks.

21. The video encoder according to any one of claims 17 to 20, wherein the video encoder further comprises a write unit, configured to write optical-to-electrical conversion information of the image block into a bitstream, wherein the optical-to-electrical conversion information is used by a decoder side to determine an electro-optical transfer function for a decode block corresponding to the image block.

22. The video encoder according to claim 21, wherein the optical-to-electrical conversion information comprises at least one of the following information of the image block:

an index of the optical-electro transfer function corresponding to the image block;

the statistical luminance value of the image block; or

a parameter of the optical-electro transfer function corresponding to the image block.

23. The video encoder according to any one of claims 17 to 22, wherein the statistical value is an average luminance value, a luminance variance, a maximum luminance value, a minimum luminance value, or a luminance histogram statistical value of pixels in the image block.

24. The video encoder according to any one of claims 17 to 23, wherein at least two of the multiple image blocks correspond to a same optical-electro transfer function.

25. The video encoder according to any one of claims 17 to 24, wherein the determining unit is specifically configured to: determine, according to a statistical luminance value of any first image block of the multiple image blocks, an optical-electro transfer function corresponding to the first image block; determine a luminance correlation between the first image block and remaining image blocks other than the first image block; determine, according to the determined luminance correlation, whether the remaining image blocks and the first image block share a same optical-electro transfer function; and determine, when determining that the remaining image blocks and the first image block share a same optical-electro transfer function, the optical-electro transfer function corresponding to the first image block as a global optical-electro transfer function corresponding to the HDR image frame; or determine, according to statistical luminance values of the remaining images when determining that an image block that cannot share a same optical-electro transfer function with the first image block exists in the remaining image blocks, respective optical-electro transfer functions corresponding to the remaining image blocks.

26. A video decoder, comprising:

   a decoding unit, configured to decode a bitstream to reconstruct a high dynamic range HDR image frame, wherein the HDR image frame comprises multiple image blocks;
   an obtaining unit, configured to obtain optical-to-electrical conversion information of each of the multiple image blocks from the bitstream, wherein the optical-to-electrical conversion information is determined by an encoder side based on a statistical luminance value of a code block corresponding to the image block, and the optical-to-electrical conversion information is used by a decoder side to determine an electro-optical transfer function corresponding to the image block;
   a determining unit, configured to determine, in multiple preset electro-optical transfer functions according to the optical-to-electrical conversion information of the image block, the electro-optical transfer function corresponding to the image block; and
   an electrical-to-optical conversion unit, configured to perform electrical-to-optical conversion on the image block according to the electro-optical transfer function corresponding to the image block.

27. The video decoder according to claim 26, wherein the optical-to-electrical conversion information comprises index information used to indicate an index of the electro-optical transfer function for the image block; the index information is determined by the encoder side based on an index of an optical-electro transfer function corresponding to the image block; and the determining unit is specifically configured to determine, in the multiple preset electro-optical transfer functions according to the index of the electro-optical transfer function for the image block, the electro-optical transfer function corresponding to the image block.

28. The video decoder according to claim 26, wherein the optical-to-electrical conversion information comprises the statistical luminance value of the code block corresponding to the image block; and the determining unit is specifically configured to: separately determine function values of the multiple preset electro-optical transfer functions according to the statistical luminance value of the code block corresponding to the image block; select, from the function values of the multiple electro-optical transfer functions, a target function value having a smallest difference from a preset value; and determine an electro-optical transfer function corresponding to the target function value as the electro-optical transfer function corresponding to the image block.

29. The video decoder according to claim 26, wherein the optical-to-electrical conversion information comprises the statistical luminance value of the code block corresponding to the image block; and the determining unit is specifically configured to: determine a first numerical interval within which the statistical luminance value of the code block corresponding to the image block falls, wherein the first numerical interval is one of multiple preset numerical intervals; and determine, according to a one-to-one correspondence between the multiple numerical intervals and the multiple electro-optical transfer functions, an electro-optical transfer function corresponding to the first numerical interval as the electro-optical transfer function corresponding to the image block.

30. The video decoder according to any one of claims 26 to 29, wherein the optical-to-electrical conversion information comprises the statistical luminance value of the code block corresponding to the image block; and the determining unit is specifically configured to: determine, according to a statistical luminance value of a code block corresponding to any first image block of the multiple image blocks, an electro-optical transfer function corresponding to the first image block; determine a luminance correlation between the code block corresponding to the first image block and the code blocks corresponding to remaining image blocks other than the first image block; determine, according to the determined luminance correlation, whether the remaining image blocks and the first image block share a same electro-optical transfer function; and when determining that the remaining image blocks and the first image block share a same electro-optical transfer function, determine the electro-optical transfer function corresponding to the first image block as a global electro-optical transfer function corresponding to the HDR image frame; or when determining that an image block that cannot share a same electro-optical transfer function with the first image block exists in the remaining image blocks, determine, according to statistical luminance values of the code blocks corresponding to the remaining images, respective electro-optical transfer functions corresponding to the remaining image blocks.

31. The video decoder according to any one of claims 26 to 30, wherein the optical-to-electrical conversion information comprises at least one of the following information of the image block:

the index information used to indicate the index of the electro-optical transfer function corresponding to the image block;
information used to indicate a parameter of the electro-optical transfer function corresponding to the image block; or
the statistical luminance value of the code block corresponding to the image block.

32. The video decoder according to any one of claims 26 to 31, wherein the statistical value is an average luminance value, a luminance variance, a maximum luminance value, a minimum luminance value, or a luminance histogram statistical value of pixels in the code block corresponding to the image block.

FIG. 1

```
                                                              210
┌─────────────────────────────────────────────────────────┐ ⌐
│  Obtain a to-be-encoded HDR image frame, where the HDR    │
│  image frame includes multiple image blocks               │
└─────────────────────────────────────────────────────────┘
                            │
                            ▼
                                                              220
┌─────────────────────────────────────────────────────────┐ ⌐
│  Determine, in multiple preset optical-electro transfer   │
│  functions according to a statistical luminance value of  │
│  each of the multiple image blocks, an optical-electro    │
│  transfer function corresponding to the image block       │
└─────────────────────────────────────────────────────────┘
                            │
                            ▼
                                                              230
┌─────────────────────────────────────────────────────────┐ ⌐
│  Perform optical-to-electrical conversion on the image    │
│  block according to the optical-electro transfer function │
│  corresponding to the image block                         │
└─────────────────────────────────────────────────────────┘
                            │
                            ▼
                                                              240
┌─────────────────────────────────────────────────────────┐ ⌐
│  Encode the multiple image blocks on which the            │
│  optical-to-electrical conversion has been performed      │
└─────────────────────────────────────────────────────────┘
```

FIG. 2

FIG. 3

| | |
|---|---|
| Decode a bitstream to reconstruct an HDR image frame, where the HDR image frame includes multiple image blocks | 410 |

| | |
|---|---|
| Obtain optical-to-electrical conversion information of each of the multiple image blocks from the bitstream, where the optical-to-electrical conversion information is determined by an encoder side based on a statistical luminance value of a code block corresponding to the image block, and the optical-to-electrical conversion information is used by a decoder side to determine an electro-optical transfer function corresponding to the image block | 420 |

| | |
|---|---|
| Determine, in multiple preset electro-optical transfer functions according to the optical-to-electrical conversion information of the image block, the electro-optical transfer function corresponding to the image block | 430 |

| | |
|---|---|
| Perform electrical-to-optical conversion on the image block according to the electro-optical transfer function corresponding to the image block | 440 |

FIG. 4

FIG. 5

Video encoder 600

Obtaining unit 610

Determining unit 620

Optical-to-electrical conversion unit 630

Encoding unit 640

FIG. 6

Video decoder 700

Decoding unit 710

Obtaining unit 720

Determining unit 730

Electrical-to-optical conversion unit 740

FIG. 7

Video encoder 800

Memory 810

Processor 820

FIG. 8

Video decoder 900

Memory 910

Processor 920

FIG. 9

# INTERNATIONAL SEARCH REPORT

| International application No. |
|---|
| PCT/CN2015/081066 |

**A. CLASSIFICATION OF SUBJECT MATTER**

H04N 19/46 (2014.01) i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI: image, picture, video, compress, encode, decode, photoelectricity, transform, gamma, statistic, variance, mean, local area, area, block

WPI, EPODOC: image, picture, video, compress, encode, decode, code, photoelectricity, transform, gamma, statistic, mean, error, region, area, block

**C. DOCUMENTS CONSIDERED TO BE RELEVANT**

| Category* | Citation of document, with indication, where appropriate, of the relevant passages | Relevant to claim No. |
|---|---|---|
| X | CN 101335894 A (MITSUBISHI ELECTRIC CORPORATION), 31 December 2008 (31.12.2008), description, page 1, paragraph 3 and page 5, paragraph 2 to page 7, paragraph 9, and figure 3 | 1-8, 10-13, 15-24, 26-29, 31-32 |
| A | CN 101951523 A (BEIJING UNIVERSITY OF TECHNOLOGY), 19 January 2011 (19.01.2011), the whole document | 1-32 |
| A | CN 101026773 A (HUAWEI TECHNOLOGIES CO., LTD.), 29 August 2007 (29.08.2007), the whole document | 1-32 |
| A | JP 2004112561 A (RICOH KK), 08 April 2004 (08.04.2004), the whole document | 1-32 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 August 2015 (13.08.2015) | **31 August 2015 (31.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Chang** Telephone No.: (86-10) **62414452** |
|---|---|

Form PCT/ISA/210 (second sheet) (July 2009)

### INTERNATIONAL SEARCH REPORT
Information on patent family members

| | International application No. |
|---|---|
| | **PCT/CN2015/081066** |

| Patent Documents referred in the Report | Publication Date | Patent Family | Publication Date |
|---|---|---|---|
| CN 101335894 A | 31 December 2008 | EP 2009921 A2 | 31 December 2008 |
| | | US 2009003457 A1 | 01 January 2009 |
| | | EP 2009921 A3 | 22 June 2011 |
| | | US 8085852 B2 | 27 December 2011 |
| | | JP 2009010943 A | 15 January 2009 |
| | | CN 101335894 B | 27 March 2013 |
| | | JP 5153454 B2 | 27 February 2013 |
| | | US 2009003718 A1 | 01 January 2009 |
| | | US 7983496 B2 | 19 July 2011 |
| CN 101951523 A | 19 January 2011 | CN 101951523 B | 24 October 2012 |
| CN 101026773 A | 29 August 2007 | CN 101026773 B | 12 May 2010 |
| | | WO 2007095811 A1 | 30 August 2007 |
| JP 2004112561 A | 08 April 2004 | US 2004125410 A1 | 01 July 2004 |
| | | US 7376268 B2 | 20 May 2008 |

Form PCT/ISA/210 (patent family annex) (July 2009)